# EUROPEAN PATENT APPLICATION

(11) **EP 2 684 476 A1**
(43) Date of publication of application: **15.01.2014**
(21) Application number: 12176286.8
(22) Date of filing: 13.07.2012
(51) Int. Cl.: A43B 7/32, A43B 23/08, B29D 35/14, A43B 23/02

(54) **Safety boot with protective layer**

(71) Applicant: Bekina NV, 9690 Kluisbergen (BE)
(72) Inventor: Vanderbeke, Thomas, 9681 Maarkedal (BE)
(74) Representative: BiiP cvba

(57) **Abstract**

The present invention discloses safety footwear manufactured in a foamed plastic material with an additional protective outer layer, and having 3-dimensionally shaped inserts provided therein. A method for manufacturing the footwear is also included.

The protective outer layer provides the safety footwear with improved cleanliness and durability. This enables it to be used in extreme environments.

## Description

### FIELD OF THE INVENTION

The present invention concerns footwear manufactured in a foamed plastic material with an additional protective outer layer, and having 3-dimensionally shaped inserts provided therein or thereon, in particular the invention concerns safety boots having a reinforcement insert in the toe-section.

### BACKGROUND OF THE INVENTION

Safety boots are wide-spread in industrial environments from slaughter houses and food auction halls to food preparation and food packaging plants. Furthermore they are used in industries where extreme environmental conditions are present, for example freezers (extreme cold) and chemical plants.

US 5,163,198 discloses a safety boot having a shaft of foamed plastic material and a steel toe cap partially embedded therein. A drawback of a safety boot according to US '198 however is that the outer surface of the boot shaft, consisting of a foamed material has poor cleanliness, and small cavities wherein small particles settle that are very difficult to remove.

Especially since several food crises spreading rapidly geographically and infecting large numbers of food stocks and or people have occurred regularly in the last decade, cleanliness of the footwear has become an important attention point in food processing areas.

In order to address the above problem WO 00/51458 discloses boots comprising a foamed EVA-based shaft covered at its outer surface with a thermoplastic polyurethane based liner. According to WO 00/51458 the boots are manufactured by manufacturing a composite sheet comprising a foamed EVA layer and a TPU liner, subsequently heating said composite sheet and compression molding the heated sheet to form the upper section of a boot.

Although the technology disclosed in WO 00/51458 allows manufacturing of boots having a surface with a low roughness that is easy to clean, the disclosed method does not allow manufacturing safety boots having a 3-dimensionally shaped insert for the reason that such insert cannot be incorporated in a composite sheet for subsequent compression molding.

It is clear from the above that there remains a market demand for easy to clean and maintain safety boots.

### SUMMARY OF THE INVENTION

The present invention addresses this problem by providing a footwear having an upper section of foamed plastic material and a liner of plastic material covering the outer surface of said upper section, **characterized in that** the upper section further comprises a 3-dimensionally pre-shaped insert.

The present invention also concerns a method for manufacturing such footwear, said method comprising the steps of:
a. Providing a mold;
b. Providing a 3-dimensionally shaped material in the mold cavity;
c. Providing a liner in the mold cavity;
d. Immobilizing said liner to the inner surface of the mold cavity;
e. Subsequently injecting and foaming a foamable plastic material in said mold cavity to manufacture the footwear.

### BRIEF DESCRIPTION OF THE INVENTION

The present invention describes safety footwear more specifically a boot and a method of producing such a boot. The boot comprises of several layers of material each having their specific function and properties.

According to the present invention the safety footwear comprise 3-dimensional inserts which are preferably embedded entirely in the foam layer of the toe section of the footwear. These preformed inserts are made from a rigid material i.e. metal (steel), polyethylene polypropylene, polycarbonate, reinforced glass fibers or the like. In some cases perforations might be present in the inserts.

The method results in the construction of comfortable safety footwear having the properties necessary for use in extreme conditions. Moreover, the methods of the present invention provide the flexibility to vary the properties of the resultant footwear, allowing the footwear to be specifically tailored to the environment in which it is designed to be used, without the need for multiple sets of molds or manufacturing equipment.

The liner, preferably thermoplastic polyurethane, is connected to the foam layer during the 3-dimensional shaping of the footwear without any use of glue or any other mechanical fastening means. This method has great advantage towards the ease of manufacturing and it also lowers the cost. The liner also avoids that dirt, sand, micro-organisms or any particles can settle in the boot. Furthermore the liner makes the boot more durable.

### BRIEF DESCRIPTION OF THE DRAWINGS

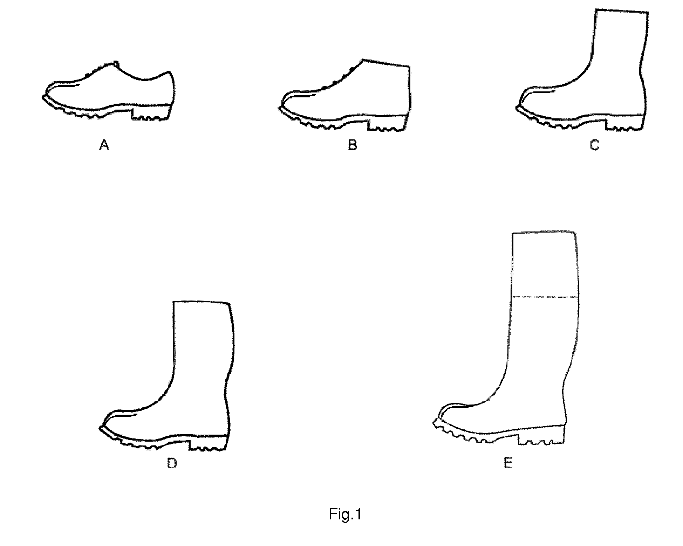

FIG. 1 represents different kind of footwear including the safety insert

### DETAILED DESCRIPTION OF THE INVENTION

The present invention comprises footwear, more particularly a safety boot and a method of manufacturing safety footwear. The boot comprises a sole and an upper section fixed to said sole. According to the present invention the upper section is a layered structure comprising a foam layer and a liner on the outer surface of said foam layer. The sole section can be manufactured from rubber, polymer or any other suitable material.

The term boot includes any kind of safety footwear shown in Fig. 1 from a low shoe A to an ankle boot B and from a half-knee boot C, knee-height boot D to a thigh boot E. All these kind of boots are shown in ISO20345. Typical examples are Wellington® boots.

It is preferable that one or more of the layers forming the upper section of the footwear include a thermo-formable material. In one preferred embodiment, the footwear in particular a boot comprises at least a first layer of thermoset foam and a second layer (liner) of thermoplastic foil.

The term upper section refers to the entire boot section without sole. Other terms which are used for this part are vamp or upper.

At least one 3-dimensionally shaped insert is provided in said foam layer, either partially, more preferably entirely embedded in the foam layer. By partially embedded is meant that at least 50% of the surface of the rigid toe cap, preferably 70%, highly preferred 90% is embedded in the foam layer. These inserts can be made of any kind of metal, or polymer material. The said inserts meet with the international standards like EN/ISO 20345, EN12568, ASTM S2413 and CAN/CSA Z195, regardless the issue. The said inserts are capable to withstand an impact force ranging from 100J to 200J and a compression force of at least 10000N, preferably 15000N.The foam layer preferably comprises a thermoset foam, preferably polyurethane.

In a preferred embodiment the inserts are positioned in the toe section of the boot. The said insert comprises a rigid toe cap, providing an impact and compression resistant safety boot.

In another preferred embodiment the inserts are perforated resulting in an even better bonding of rigid insert and the foam layer.

The liner can be any kind of material, depending on the desired properties of the footwear being constructed. The liner preferably comprises thermoplastic polyurethane (TPU). The thickness, hardness, density, roughness, durability or color, etc. of the thermoplastic foil can be varied according to the function. The foil also improves the cleanliness.

A third layer of fabric can be positioned on the inner side. Suitable fabrics can include a mesh fabric formed from nylon, polyester, poly-cotton, cotton, acetate, or acrylic.

The present invention also concerns a method of producing such footwear by molding and includes the steps of positioning the thermoplastic foil in a mold member having a mold cavity. Hereby it is important the liner is fixed firmly in the mold. This provides a smooth surface whereon the foamable material can be applied.

In the next step the rigid toe cap is placed in the toe section of the footwear in the mold. After the positioning of the toe cap, the mold is closed and the foamable plastic material is injected into the mold. The foaming reaction can take place before or after injection. By this method of forming, the rigid toe cap is entirely or partially embedded in the foam layer. This has the advantage of making the boot more flexible and thus improving the comfort of the wearer.

Using this method the upper section of the footwear is formed to the desired 3-dimensional shape.

The resulting upper section can be joined to a sole, as well as other footwear components, to complete the construction of the safety boot.

In a preferred embodiment the sole is added to the upper section after the forming of the upper section. This is achieved by introducing an additional cavity onto the upper section. Subsequently the additional cavity is closed and sole material is injected. This method of manufacturing a boot allows a strong bonding between the upper section and the sole section without using any adhesives or other methods such as sewing.

The manufacturing method of the present invention simplifies safety footwear construction, reducing manufacturing costs and increasing the process flexibility, providing a very good outside barrier which can protect the foam from staining. While providing a better outside barrier, the foam can be made lighter thus saving material costs which could not be achieved without the foil.

## Claims

1. Footwear having an upper section of foamed plastic material and a liner of plastic material covering the outer surface of said upper section, **characterized in that** the upper section further comprises a 3-dimensionally shaped insert.

2. Footwear according to claim 1, wherein said insert is at least partially embedded in said foamed material, more preferably entirely embedded in said foamed material.

3. Footwear according to claims 1 or 2, wherein said insert is a safety cap, positioned in the toe-section of the footwear.

4. Footwear according to any of the preceding claims, wherein the foamed material contacts said liner and wherein no glue or mechanical fastening means is applied between the foamed material and the liner.

5. Footwear according to any of the preceding claims, wherein said insert resists an impact force of at least 100 Joule and a compression force of at least 10000N.

6. Footwear according to any of the preceding claims, wherein said insert is manufactured in a material chosen from the group consisting of metal, in particular steel, polyethylene, polypropylene, polycarbonate and reinforced glass fibers.

7. Footwear according to any of the preceding claims, wherein said foamed material is a polyurethane based foam material.

8. Footwear according to any of the preceding claims, wherein said liner is composed of a polyurethane based material, preferably a thermoplastic polyurethane based material.

9. Footwear according to any of the preceding claims, wherein said footwear is a low shoe, ankle boot, half-knee boot, knee-height boot, thigh boot.

10. A method of manufacturing footwear as identified in any of claims 1-9, said method comprising the steps of:
a. Providing a mold;
b. Providing a 3-dimensionally shaped material in the mold cavity;
c. Providing a liner in the mold cavity;
d. Immobilizing said liner to the inner surface of the mold cavity;
e. Subsequently injecting and foaming a foamable plastic material in said mold cavity to manufacture the footwear.

11. The method according to claim 10, wherein said foamable plastic is injected and foamed directly against said liner.
